# EUROPÄISCHE PATENTSCHRIFT

(11) **EP 0 712 712 B1**
(45) Veröffentlichungstag und Bekanntmachung des Hinweises auf die Patenterteilung: **27.12.2000**
(21) Anmeldenummer: 95116402.9
(22) Anmeldetag: 18.10.1995
(51) Int. Cl.: B29C 51/26, B29B 13/02, B29C 51/42, B29C 51/46, B29C 31/00, B65H 20/04

(54) **Verfahren zum Ermitteln und Einstellen der Transportgeschwindigkeit einer Vorheizung zum Erwärmen einer Bahn aus thermoplastischer Kunststofffolie und Vorheizung zur Durchführung des Verfahrens**
Method for detecting and adjusting the transportation speed in a preheating oven for heating a thermoplastic film and preheating oven for carrying out the method
Procédé pour détecter et pour régler la vitesse de transport dans un four pour le préchauffage d'une bande de film en matière thermoplastique et four de préchauffage pour réaliser ce procédé

(30) Priorität: 15.11.1994 DE 4440724
(43) Veröffentlichungstag der Anmeldung: 22.05.1996
(73) Patentinhaber: Adolf Illig Maschinenbau GmbH & Co, D-74081 Heilbronn (DE)
(72) Erfinder: Janke, Jürgen, D-74074 Heilbronn (DE)

(56) Entgegenhaltungen:
- DE-A- 4 111 315
- DE-C- 3 311 988
- GB-A- 922 922
- US-A- 2 725 508
- US-A- 4 416 200

## Beschreibung

Die Erfindung betrifft ein Verfahren zum Ermitteln und Einstellen der Transportgeschwindigkeit einer Vorheizung nach der Gattung des Hauptanspruches sowie eine Vorheizung zur Durchführung des Verfahrens.

Aus der DE-PS 33 11 988 ist eine gattungsgemäße Vorheizung bekannt. Die Drehzahl und damit die Transportgeschwindigkeit des Antriebsmotors wird bei dieser bekannten Vorheizung von Hand eingestellt, und zwar in der Weise, daß bei dieser etwas mehr Folie transportiert wird als die nachgeschaltete Thermoformmaschine benötigt. Wird die Zwischenschlaufe zu groß, wird auf eine langsamere Transportgeschwindigkeit umgeschaltet, die Differenzgeschwindigkeit zwischen beiden Transportgeschwindigkeiten ist ebenfalls von Hand einstellbar.

Umständlich für die Bedienungsperson ist das Ermitteln dieser beiden Transportgeschwindigkeiten. Wählt man diese zu gering, wird die Zwischenschlaufe aufgebraucht und es gibt eine Störung. In der Praxis wählt man deshalb eher eine zu große Abzugsgeschwindigkeit. Dabei geht die Vorheizung dann immer in Stopp-Betrieb, weil die Zwischenschlaufe zu lang wird. Dies führt zu einer ungleichmäßigen Erwärmung der Folienbahn, da sie unterschiedlich lange auf den Heizwalzen aufliegt. Die Abtastung der Zwischenschlaufe erfolgt bei dieser bekannten Vorheizung über mehrere Lichtschranken, die eine Umschaltung auf die unterschiedlichen Transportgeschwindigkeiten bewirken.

Aus der DE-PS 41 11 315 ist ebenfalls eine Vorheizung bekannt, bei der über zwei Abzugswalzen die Folienbahn durch eine Wärmekammer transportiert wird und die eine Zwischenschlaufe zur nachgeschalteten Thermoformmaschine bildet. Hinweise zur Einstellung der Transportgeschwindigkeit sind dieser Patentschrift in der Weise zu entnehmen, daß der Antrieb für den Folientransport in der Vorheizung taktweise geschaltet wird in Abhängigkeit des Taktes der Thermoformmaschine. Dies wirkt aber bei jedem Takt ein erneutes Anfahren der Vorheizung mit den Nachteilen der Beschleunigung der vorgeschalteten Folienrolle. Bei Einsatz von beheizten Walzen entsteht bei dieser Fahrweise eine ungleichmäßige Erwärmung der Folienbahn, weil die Folie unterschiedlich lange auf den Kontaktflächen der Heizwalzen aufliegen.

In der Praxis wird man beim Anfahren einer Thermoformmaschine die Taktzahl der Thermoformmaschine optimal an das Produkt und den zu verformenden Kunststoff anpassen. Die sich dabei ergebenden Taktzeitveränderungen führen ebenfalls zu Problemen mit der Transportgeschwindigkeit der vorgeschalteten Vorheizung. Da diese autark arbeitet, werden die Auswirkungen einer Taktzahlveränderung der Thermoformmaschine auf die Vorheizung in der Regel nicht ausgeglichen.

Der Erfindung liegt die Aufgabe zugrunde, ein Verfahren zu finden, mit dem die Einstellung der Transportgeschwindigkeit von Hand entfallen kann. Die Vorheizung sollte aufgrund des Folienverbrauches der Thermoformmaschine ihre durchschnittliche Transportgeschwindigkeit selbst ermitteln. Mit diesem ermittelten Wert sollte dann entweder wie bisher bekannt eine obere Abzugsgeschwindigkeit und eine Differenzgeschwindigkeit gebildet werden. Oder auf andere Weise sollte eine Anpassung dieses ermittelten Wertes an den Durchsatz der Thermoformmaschine erfolgen.

Die Ermittlung und Einstellung der durchschnittlichen Transportgeschwindigkeit sollte auf relativ einfache Weise erfolgen können ohne in die Steuerung der Thermoformmaschine eingreifen zu müssen. Die Vorheizung sollte also weiterhin steuerungsmäßig völlig autark betrieben werden können.

Gelöst ist diese Aufgabe durch die im Kennzeichen des Hauptanspruches angegebenen Maßnahmen. Die Unteransprüche stellen vorteilhafte Weiterbildungen dar. Sie betreffen ferner die Vorheizung zur Durchführung des Verfahrens.

Die Erfindung wird anhand der schematischen Zeichnungen näher beschrieben. Es zeigt:
- Figur 1 -: einen Längsschnitt durch die Vorheizung
- Figur 2 -: einen Querschnitt durch die Lagerung der Schwinge zur Abtastung der Folienschlaufe.

Die Vorheizung zur Durchführung des Verfahrens besteht aus zwei Heizwalzen 1, 2, die in einem Gehäuse 3 drehbar gelagert sind. Ihre Beheizung erfolgt vorzugsweise über nicht dargestellte elektrische Heizkörper, angeordnet im Mantel der Heizwalzen 1, 2. Zudem wird die Luft im Gehäuse 3 von nicht dargestellte Einrichtungen beheizt. Gegen die Heizwalze 1 wird eine Transportwalze 4 angepreßt, zwischen beiden befindet sich die Folienbahn 5. Über einen in der Drehzahl veränderbaren Antrieb 6 erfolgt die Drehbewegung der Transportwalze 4. Für die Zuführung der Folienbahn 5 ist im Gehäuse 3 ein Schlitz 7 vorgesehen, für den Austransport der Folienbahn 5 ein Schlitz 8. Die Folienbahn 5 bildet vor dem Austransport aus dem Gehäuse 3 eine Schlaufe 9, die über eine Schwinge 10 geführt wird. Diese Schwinge 10 besteht aus einer drehbaren Walze 11, die über zwei Hebel 12 mit einer Welle 13 verbunden ist. Die drehbar gelagerte Welle 13 steht mit einem Meßwertgeber 14 in Verbindung. Dieser ist an die Steuerung 15 der Vorheizung angeschlossen, die auch die Drehzahl des Antriebes 6, z. B. über einen Frequenzumformer, steuert.

Ausgehend von einer betriebsbereiten Vorheizung und einer betriebsbereiten nachgeschalteten, intermittierend betriebenen Thermoformmaschine 16 findet beim Starten der Maschinen, z. B. nach einer Störung oder bei Schichtbeginn, folgender Verfahrensablauf statt, um die Drehzahl des Antriebes 6 und damit die Transportgeschwindigkeit der Folienbahn 5 zu ermitteln.

Wenn die Transporteinrichtung 17 der Thermoformmaschine 16 den ersten Transportschritt ausführt, wird die Schwinge 10 um einen entsprechenden Weg angehoben. Ihr Drehwinkel wird vom Meßwertgeber 14 erfaßt und bildet einen Wert für den Verbrauch pro Takt, den die Steuerung errechnet. Der Meßwertgeber kann als absolutes oder inkrementales Wegmeßsystem ausgebildet sein. Er kann auch aus einem Potentiometer bestehen. Erfolgt jetzt der zweite Takt der Thermoformmaschine 16, wird die Schwinge 10 erneut ausgelenkt, so daß der Steuerung 15 durch Zeiterfassung auch die Taktzeit bekannt ist. Aus beiden Werten errechnet diese die erforderliche Drehzahl des Antriebes 6, die den geforderten durchschnittlichen Folientransport erzeugt.

Zwischen dem ersten und zweiten Takt der Thermoformmaschine 16 kann der Antrieb 6 entweder stillstehen - dann findet die Messung wie vorstehend beschrieben statt. Dies setzt aber ggf. eine entsprechend große Zwischenschlaufe voraus, damit Folie für zwei Takte entnommen werden kann. Oder der Antrieb 6 wird mit einer von der Steuerung vorgegebenen beliebigen Drehzahl bewegt, sobald die Schwinge 10 ihre untere Ausgangslage verlassen hat. Liegt diese vorgegebene Drehzahl höher als es der durchschnittlichen Transportgeschwindigkeit entspricht, erreicht die Schwinge 10 ihre untere Lage vor dem zweiten Takt, der Antrieb 6 wird stillgesetzt. Die Steuerung 15 errechnet jetzt aus vorgegebener Drehzahl des Antriebes 6 und der Transportzeit den Folienverbrauch pro Takt. Die Taktzeit wird wie beschrieben mit Beginn des zweiten Taktes ermittelt.

Startet der Antrieb 6 zwischen dem ersten und zweiten Takt der Thermoformmaschine 16 mit einer niedrigeren Drehzahl als es der durchschnittlichen Transportgeschwindigkeit der Folienbahn entspricht, erreicht die Schwinge 10 bis zum Beginn des zweiten Taktes nicht wieder ihre untere Ausgangslage. Da der Meßwertgeber 14 aber die Ausgangslage und die Lage bei Beginn des zweiten Taktes der Steuerung 15 meldet, kann diese diese auch in diesem Fall aus den beiden Werten und der Drehzahl des Antriebes 6 den Folienverbrauch pro Takt errechnen. Auf jeden Fall kann die Steuerung 15 allein aus Meßwerten, die die Vorheizung liefert, den durchschnittlichen Folientransport errechnen.

Es gibt nun mehrere Wege, im Betrieb der Vorheizung den Antrieb 6 mit dieser ermittelten Drehzahl zu steuern.

Ein Weg ist der, daß der Antrieb 6 mit zweierlei Drehzahlen betrieben wird - z. B. mit einer Drehzahl 5 % über der ermittelten Drehzahl und einer zweiten Drehzahl 5 % unter der ermittelten Drehzahl, die den durchschnittlichen Folienvorschub erbringt. Die Umschaltung zwischen den beiden Drehzahlen erfolgt dann abhängig davon, ob die Schlaufe 9 bzw. die Schwinge 10 eine obere bzw. untere Lage erreicht hat.

Oder man nutzt die Vorteile des Meßwertgebers 14, der ständig die Lage der Schwinge 10 an die Steuerung 15 meldet. Diese kann den Trend erkennen, den die Schlaufe 9 lagemäßig einnimmt und die ermittelte Drehzahl des Antriebes 6 im Sinne einer Regelung dieser Lageveränderung anpassen. In diesem Fall wird man nach wenigen Takten eine gleichmäßige Transportgeschwindigkeit der Folienbahn 5 ohne nennenswerte Schwankungen erreichen. Dies trägt wesentlich zur gleichmäßigen Erwärmung der Folienbahn bei. Wird die Taktzahl der Formmaschine 16 verändert, wird die Drehzahl des Antriebes 6 automatisch angepaßt.

Eine Erkennung des Trendes der Schlaufe 9 kann z. B. in der Weise erfolgen, daß man die oberen erreichten Meßwerte miteinander vergleicht und feststellt, ob sich die Zwischenschlaufe nach oben oder unten verschiebt. Genauso ist eine Abtastung der unteren Lagen möglich oder man bildet einen Mittelwert der Meßwerte und vergleicht diese Mittelwerte.

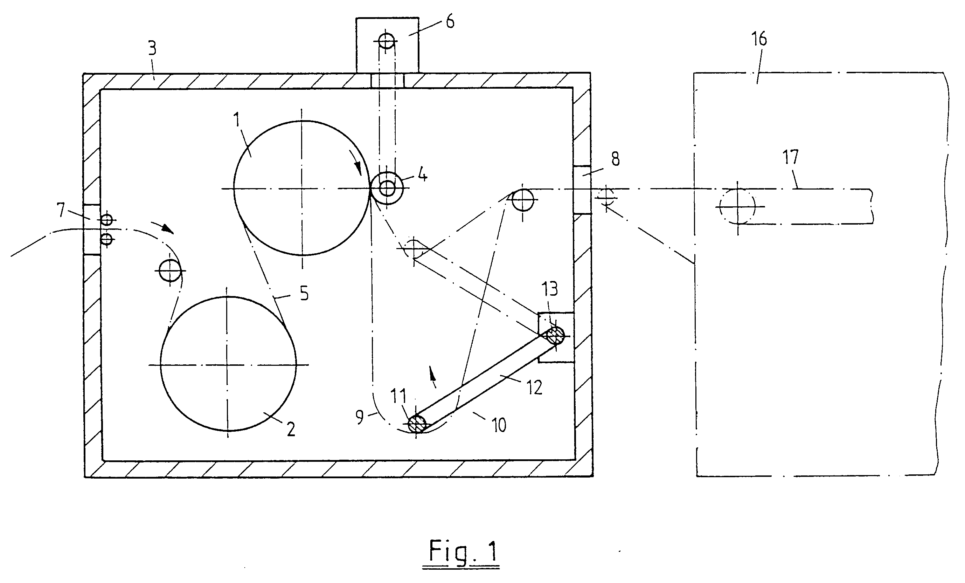

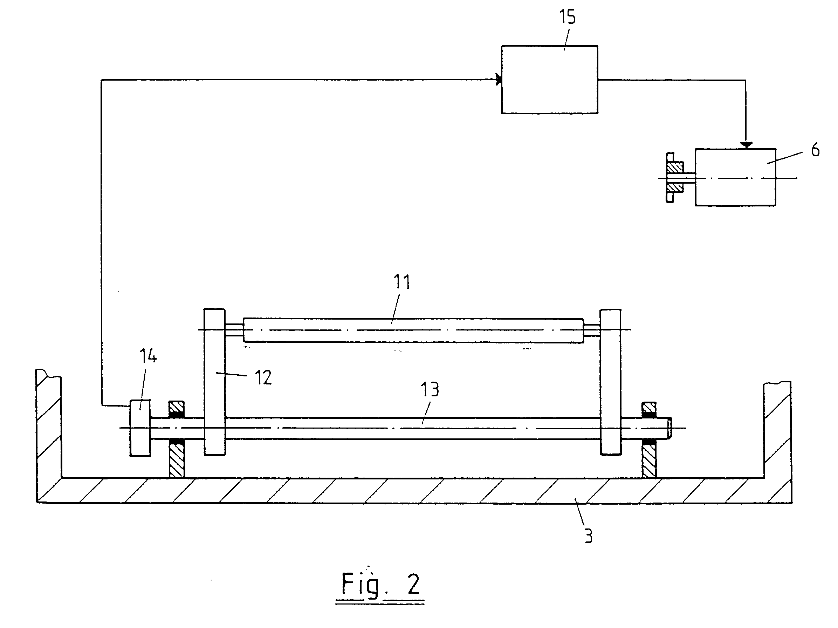

Das Erfassen der Lage der Schlaufe 9 wird gemäß den Figuren 1 und 2 über Schwinge 10 und Meßwertgeber 14 auf indirekte Weise vorgenommen. Es sind andere Meßmethoden für die indirekte Erfassung der Lage der Schlaufe 9 möglich, z. B. über Tänzerwalze mit induktivem Wegaufnehmer. Auch ist eine direkte Erfassung der Schlaufe 9 z. B. über optische, kapazitive oder Ultraschall-Meßeinrichtungen möglich.

Die Ermittlung der Transportgeschwindigkeit auf die beschriebene Weise wird man immer durchführen, nachdem die Steuerung 15 der Vorheizung eingeschaltet wurde, z. B. nach "Hauptschalter ein" bzw. "Steuerstrom ein". Geht die Vorheizung während des Betriebes auf "Stop", z. B. weil die Thermoformmaschine kurz gestoppt wurde, kann man den ermittelten Wert speichern und bei Weiterbetrieb den Antrieb 6 entsprechend starten. Oder man ermittelt den Wert jedesmal, nachdem die Schlaufe 9 die untere Lage erreicht hat, beim erneuten Anfahren der Thermoformmaschine 16.

Die Vorheizung zur Durchführung des Verfahrens weist eine Einrichtung auf, die zumindest die Endlage der Schlaufe 9 erfaßt und einer Steuerung 15 meldet, die aus dem errechneten Vorschub pro Takt und der Taktzeit eine durchschnittliche Drehzahl für den Transportantrieb 6 ermittelt. Die Vorheizung kann dabei wie dargestellt mit zwei Heizwalzen oder mit einer, drei oder mehreren Heizwalzen betrieben werden. Das erfindungsgemäße Verfahren ist auch anwendbar bei einer Wärmekammer, in der die Folienbahn über mehrere unbeheizte Umlenkwalzen geführt wird und die Erwärmung nur durch Warmluft erfolgt, wenn am Ende der Heizstrecke eine Zwischenschlaufe durch ein Transportwalzenpaar gebildet wird. Unabhängig davon, ob die Zwischenschlaufe innerhalb oder außerhalb der Heizkammer liegt.

## Patentansprüche

1. Verfahren zum Ermitteln und Einstellen der Transportgeschwindigkeit einer Folienbahn (5) aus thermoplastischem Kunststoff bei einer kontinuierlich betriebenen Vorheizung zur Erwärmung der Folienbahn (5), die einer intermittierend betriebenen Thermoformmaschine (16) vorgeschaltet ist, bei dem die Folienbahn (5 über zwei aneinander gepreßte Walzen (1, 4), die eine Transporteinrichtung bilden, transportiert wird und bei dem nach den Walzen (1, 4) eine Schlaufe (9) gebildet wird, deren Lage von mindestens einer Meßeinrichtung (14) erfaßt wird, dadurch gekennzeichnet, daß beim ersten Takt der Thermoformmaschine (16) nach einem Stop der Thermoformmaschine (16) die Folienbahn (5) in der Vorheizung mit einer von einer Steuerung (15) vorgegebenen Transportgeschwindigkeit gestartet, mit Beginn des zweiten Taktes der Thermoformmaschine (16) die Taktzeit der Thermoformmaschine (16) errechnet, die Veränderung der Schlaufe (9) zwischen dem ersten und dem zweiten Takt der Thermoformmaschine (16) gemessen und daraus der Folienvorschub ermittelt wird und aus Taktzeit und Folienvorschub pro Takt die erforderliche Transportgeschwindigkeit von der Steuerung (15) errechnet und zur Vorgabe der Drehzahl des Antriebes (6) der Transporteinrichtung (1, 4) herangezogen wird.

2. Verfahren nach Anspruch 1 dadurch gekennzeichnet, daß die vorgegebene Transportgeschwindigkeit beim ersten Takt der maximal möglichen Transportgeschwindigkeit der Folienbahn (5) in der Vorheizung entspricht.

3. Verfahren nach Anspruch 1 dadurch gekennzeichnet, daß die vorgegebene Transportgeschwindigkeit beim ersten Takt den Wert "Null" hat.

4. Verfahren nach Anspruch 1 dadurch gekennzeichnet, daß die vorgegebene Transportgeschwindigkeit beim ersten Takt zwischen Null und dem maximal möglichen Wert der Vorheizung liegt.

5. Verfahren nach einem der Ansprüche 1 bis 4 dadurch gekennzeichnet, daß die errechnete erforderliche Transportgeschwindigkeit bei einem Zwischenstopp der Thermoformmaschine (16) gespeichert bleibt.

6. Verfahren nach einem der Ansprüche 1 bis 4 dadurch gekennzeichnet, daß nach jedem Zwischenstopp der Thermoformmaschine (16) die erforderliche Transportgeschwindigkeit von der Steuerung (15) errechnet wird.

7. Verfahren nach einem der Ansprüche 1 bis 6 dadurch gekennzeichnet, daß die Folienbahn (5) in der Vorheizung mit zwei Transportgeschwindigkeiten betrieben wird, die um einen der Steuerung (15) vorgegebenen Faktor über und unter der ermittelten Transportgeschwindigkeit liegen, wobei die Umschaltung bei vorgegebener Lage der Schlaufe (9) erfolgt.

8. Verfahren nach einem der Ansprüche 1 bis 6 dadurch gekennzeichnet, daß die Folienbahn (5) in der Vorheizung zunächst mit der errechneten erforderlichen Transportgeschwindigkeit betrieben, die eventuelle Verlagerung der Schlaufe (9) ermittelt und die Transportgeschwindigkeit aufgrund dieser Verlagerung der Schlaufe (9) im Sinne einer Regelung verändert wird.

9. Verfahren nach einem der Ansprüche 1 bis 8 dadurch gekennzeichnet, daß die Erfassung der Lage der Schlaufe (9) indirekt durch Erfassung der Lage einer Schwinge (10) oder Tänzerwalze erfolgt.

10. Verfahren nach Anspruch 9 dadurch gekennzeichnet, daß die Erfassung der Lage der Schwinge (10) bzw. Tänzerwalze induktiv, kapazitiv, über ein Potentiometer oder über ein absolutes oder inkrementales Wegmeßsystem erfolgt.

11. Verfahen nach einem der Ansprüche 1 bis 8 dadurch gekennzeichnet, daß die Schlaufe (9) direkt mittels optischen oder mit Ultraschall arbeitenden Meßeinrichtungen erfaßt wird.

12. Vorheizung zum Vorschalten an eine Thermoformmaschine, bestehend aus einer Heizeinrichtung zum Erwärmen einer Folienbahn aus thermoplastischem Kunststoff und einer Transporteinrichtung für die Folienbahn, mit Einrichtungen zum Erfassen der Schlaufe der Folienbahn zwischen Transporteinrichtung und Thermoformmaschine, gekennzeichnet durch eine Meßeinrichtung (14) zur ständigen direkten oder indirekten Erfassung der Lage der Schlaufe (9) und eine Steuerung (15), die aus der Veränderung der Schlaufe (9) zwischen zwei Takten der Thermoformmaschine (16) den Vorschub pro Takt und unter Zuhilfenahme der Taktzeit die erforderliche Transportgeschwindigkeit errechnen und einen Antriebsmotor (6) der Transporteinrichtung steuern kann.

13. Vorheizung nach Anspruch 12 dadurch gekennzeichnet, daß zur indirekten Erfassung der Schlaufe (9) eine Schwinge (10) vorgesehen ist, deren Welle (13) mit dem Meßwertgeber (14) verbunden ist.

14. Vorheizung nach Anspruch 13 dadurch gekennzeichnet, daß als Meßwertgeber (14) ein Potentiometer oder ein absolutes oder inkrementales Wegmeßsystem eingesetzt ist.

15. Vorheizung nach Anspruch 12 dadurch gekennzeichnet, daß zur indirekten Erfassung der Schlaufe (9) eine Tänzerwalze vorgesehen ist, die mit einem induktiven Wegmeßsystem in Verbindung steht.

16. Vorheizung nach Anspruch 12 dadurch gekennzeichnet, daß zur direkten Erfassung der Schlaufe (9) ein optisches oder mit Ultraschall arbeitendes Meßsystem eingesetzt ist.

## Claims

1. Method of detecting and selling the transport speed of a foil web (5) of thermoplastic synthetic material in a continuously operating preheating device for heating the foil web (5), which device is connected upstream of an intermittently operated thermal moulding machine (16) in which the foil web (5) is transported by way of two rollers (1, 4), which are pressed against one another and form a transport unit, and in which after the rollers (1, 4) a loop (9) is formed, the position of which is detected by at least one measuring device (14), characterised in that in the first cycle of the thermal moulding machine (16) after a stop of the thermal moulding machine (16) the foil web (5) in the preheating device is started at a transport speed predetermined by a control (15), at the beginning of the second cycle of the thermal moulding machine (16) the cycle time of the thermal moulding machine (16) is reached, the change of the loop (9) between the first and the second cycle of the thermal moulding machine (16) is measured and the foil advance is ascertained therefrom, and the required transport speed of the control (15) is calculated from cycle time and foil advance per cycle and is utilised for presetting the rotational speed of the drive (6) of the transport equipment (1, 4).

2. Method according to claim 1, characterised in that the predetermined transport speed for the first cycle corresponds with the maximum possible transport speed of the foil web (5) in the preheating device.

3. Method according to claim 1, characterised in that the predetermined transport speed for the first cycle has the value "zero".

4. Method according to claim 1, characterised in that the predetermined transport speed for the first cycle lies between zero and the maximum possible value of the preheating device.

5. Method according to one of claims 1 to 4, characterised in that the calculated required transport speed remains stored during an intermediate stop of the thermal moulding machine (16).

6. Method according to one of claims 1 to 4, characterised in that the required transport speed is calculated by the control (15) after each intermediate stop of the thermal moulding machine (16).

7. Method according to one of claims 1 to 6, characterised in that the foil web (5) in the preheating device is operated at two transport speeds which lie above and below the ascertained transport speed by a factor predetermined at the control (15), wherein the changeover takes place at predetermined positions of the loop (9).

8. Method according to one of claims 1 to 6, characterised in that the foil web (5) in the preheating device is operated initially at the calculated required transport speed, the possible shifting of the loop (9) is detected and the transport speed is changed, in the sense of a regulation, on the basis of this shifting of the loop (9).

9. Method according to one of claims 1 to 8, characterised in that the detection of the position of the loop (9) takes place indirectly through detection of the position of a rocker (10) or compensating roller.

10. Method according to claim 9, characterised in that the detection of the position of the rocker (10) or compensating roller takes place inductively, capacitively, by way of a potentiometer or by way of an absolute or incremental travel measuring system.

11. Method according to one of claims 1 to 8, characterised in that the loop (9) is directly detected by means of measuring devices operating optically or with ultrasound.

12. Preheating device for connection upstream of a thermal moulding machine, consisting heating equipment for heating a foil web of thermoplastic synthetic material and transport equipment for the foil web, with devices for detection of the loop of the foil web between transport equipment and thermal moulding machine, characterised by a measuring device (14) for constant direct or indirect detection of the position of the loop (9) and a control (15), which can calculate the required transport speed from the change of the loop (9) between two cycles of the thermal moulding machine (16), the advance per cycle and with the assistance of the cycle time and can control a drive motor (6) of the transport equipment.

13. Preheating device according to claim 12, characterised in that a rocker (10), the shaft (13) of which is connected with a measurement value transmitter (14), is provided for the indirect detection of the loop (9).

14. Preheating device according to claim 13, characterised in that a potentiometer or an absolute or incremental travel measuring system is used as measurement value transmitter (14).

15. Preheating device according to claim 12, characterised in that a compensating roller, which stands in connection with an inductive travel measuring system, is provided for the indirect detection of the loop (9).

16. Preheating device according to claim 12, characterised in that a measuring system operating optically or with ultrasound is provided for the indirect detection of the loop (9).

## Revendications

1. Procédé pour déterminer et régler la vitesse de transport d'une bande de film (5) en matière thermoplastique dans un four de préchauffage à fonctionnement continu pour chauffer la bande de film (5), en amont d'une machine de thermoformage (16) à fonctionnement intermittent, selon lequel
• la bande de film (5) est transportée par deux cylindres (1, 4) pressés l'un contre l'autre et formant une installation de transport,
• et en aval des cylindres (1, 4), la bande forme une boucle (9) dont la position est saisie par au moins une installation de mesure (14),
• caractérisé en ce que
• au cours de la première phase de fonctionnement de la machine de thermoformage (16), après arrêt de la machine (16), on démarre la bande de film (5) dans le four de préchauffage à une vitesse de transport prédéterminée par la commande (15),
• au début de la seconde phase de fonctionnement de la machine de thermoformage (16), on calcule la durée de cette phase de fonctionnement de la machine (16), on mesure la variation de la boucle (9) entre la première et la seconde phases de la machine de thermoformage (16) et on en déduit le déplacement de la feuille et, à partir de la durée d'une phase de fonctionnement et de l'avance de la feuille par phase de fonctionnement, la commande (15) calcule la vitesse de transport nécessaire et l'utilise pour prédéfinir la vitesse de rotation du moyen d'entraînement (6) de l'installation de transport (1, 4).

2. Procédé selon la revendication 1,
caractérisé en ce que
la vitesse de transport prédéterminée correspond, pour la première phase, à la vitesse de transport maximale possible de la bande en forme de film (5) dans le four de préchauffage.

3. Procédé selon la revendication 1,
caractérisé en ce que
pour la première phase de fonctionnement, la vitesse de transport prédéterminée est égale à 0.

4. Procédé selon la revendication 1,
caractérisé en ce que
pour la première phase de fonctionnement, la vitesse de transport prédéterminée est comprise entre 0 et la valeur maximale possible du préchauffage.

5. Procédé selon l'une quelconque des revendications 1 à 4,
caractérisé en ce que
la vitesse de transport, nécessaire, calculée est mémorisée lors d'un arrêt intermédiaire de la machine de thermoformage (16).

6. Procédé selon l'une quelconque des revendications 1 à 4,
caractérisé en ce qu'
après chaque arrêt intermédiaire de la machine de thermoformage (16), la commande (15) calcule la vitesse de transport nécessaire.

7. Procédé selon l'une quelconque des revendications 1 à 6,
caractérisé en ce qu'
on entraîne la bande de film (5) dans le four de préchauffage à deux vitesses de transport, ces deux vitesses se situant au-dessus et en dessous de la vitesse de transport obtenue, selon un coefficient prédéterminé par la commande (16), la commutation se faisant pour une position prédéterminée de la boucle (9).

8. Procédé selon l'une quelconque des revendications 1 à 6,
caractérisé en ce qu'
on fait défiler la bande de film (5) dans le moyen de préchauffage, tout d'abord à la vitesse de transport nécessaire, calculée, on détermine l'éventuel décalage de la boucle (9) et on modifie la vitesse de transport sur la base de ce décalage de la boucle (9), en agissant dans le sens d'une régulation.

9. Procédé selon l'une quelconque des revendications 1 à 8,
caractérisé en ce qu'
on saisit la position de la boucle (9) indirectement par la saisie de la position d'une bielle oscillante (10) ou d'un rouleau valseur.

10. Procédé selon la revendication 9,
caractérisé en ce qu'
on saisit la position de la bielle oscillante (10) ou du rouleau valseur par un moyen inductif, un moyen capacitif ou un potentiomètre ou encore à l'aide d'un système de mesure de course absolu ou intégral.

11. Procédé selon l'une quelconque des revendications 1 à 8,
caractérisé en ce qu'
on détermine la boucle (9) directement par des installations de mesure à fonctionnement optique ou aux ultrasons.

12. Four de préchauffage en amont d'une machine de thermoformage, composé d'une installation de chauffage pour chauffer une bande de film de matière thermoplastique, et d'une installation de transport pour la bande de film, d'une installation pour saisir la boucle de la bande de film entre l'installation de transport et la machine de thermoformage,
caractérisé par
une installation de mesure (14) pour la saisie permanente directe ou indirecte de la position de la boucle (9) et une commande (15) qui, à partir e la variation de la boucle (9) entre deux phases de fonctionnement de la machine de thermoformage (16), calcule l'avance par phases et, en utilisant la durée d'une phase de fonctionnement, calcule la vitesse de transport nécessaire et commande ainsi le moteur (6) de l'installation de transport.

13. Four de préchauffage selon la revendication 12,
caractérisé par
une bielle oscillante (10) prévue pour la saisie indirecte de la boucle (9), bielle dont l'axe (13) est relié aux capteurs de mesure (14).

14. Four de préchauffage selon la revendication 13,
caractérisé en ce que
le capteur de mesure (14) est un potentiomètre ou un système de mesure de course à fonctionnement absolu ou incrémental.

15. Four de préchauffage selon la revendication 12,
caractérisé par
un rouleau valseur pour saisir indirectement la boucle (9), ce rouleau coopérant avec un système inductif de mesure de course.

16. Four de préchauffage selon la revendication 12,
caractérisé par
un système de mesure optique ou aux ultrasons pour saisir directement la boucle (9).
